# EUROPÄISCHE PATENTSCHRIFT

(11) **EP 3 555 218 B1**
(45) Veröffentlichungstag und Bekanntmachung des Hinweises auf die Patenterteilung: **05.10.2022**
(21) Anmeldenummer: 17832730.0
(22) Anmeldetag: 14.11.2017
(51) Int. Cl.: C09D 133/02, C09D 201/00, E01B 19/00, C09D 5/33

(54) **SOLARSTRAHLUNG-REFLEKTIERENDE BESCHICHTUNG UND DEREN VERWENDUNG**
SOLAR RADIATION REFLECTING COATING AND ITS USE
REVÊTEMENT RÉFLÉCHISSANT À RAYONNEMENT SOLAIRE ET SON UTILISATION

(30) Priorität: 14.11.2016 DE 102016121807
(43) Veröffentlichungstag der Anmeldung: 23.10.2019
(73) Patentinhaber: Mankiewicz Gebr. & Co. (GmbH & Co. KG), 21107 Hamburg (DE); Joint Stock Company Railway Research Institute, Moskau 129626 (RU)
(72) Erfinder: SCHMAL, Eugen, 21077 Hamburg (DE); LAPIDUS, Boris Moiseevich, Moskau 129626 (RU); SUSLOV, Oleg Aleksandrovich, Moskau 129626 (RU); KOSAREV, Aleksandr Borisovich, Moskau 129626 (RU)
(74) Vertreter: Puschmann Borchert Kaiser Klettner Patentanwälte Partnerschaft mbB
(86) Internationale Anmeldenummer: PCT/DE2017/100963
(87) Internationale Veröffentlichungsnummer: WO 2018/086661

(56) Entgegenhaltungen:
- AU-A4- 2001 100 356
- AU-A4- 2001 100 356
- CN-A- 103 589 274
- CN-A- 103 589 274
- CN-A- 104 559 398
- CN-A- 104 559 398

## Beschreibung

Die vorliegende Erfindung betrifft eine Beschichtungszusammensetzung zur Herstellung von Beschichtungen, welche Solarstrahlung reflektieren. Die Beschichtungen werden für Schienen, insbesondere Eisenbahnschienen in lückenlos verschweißten Gleisen eingesetzt.

Unter dem Begriff Schienen werden lineare Trag- und Führungselemente verstanden, die den Fahrweg für Schienenfahrzeuge bilden. Schienen sind üblicherweise standardisierte und genormte Walzstahlerzeugnisse. Sie sind in regelmäßigen, kurzen Abständen zumeist auf quer zur Fahrspur ausgelegten Bahnschwellen aus Beton, Stahl, Kunststoff oder Holz befestigt. Bahnschwellen und Schienen bilden ein Gleis, welches zusammen mit der Gleisbett-Gründung als Oberbau einer Bahnstrecke bezeichnet wird.

Üblicherweise werden Bahnstrecken mit durchgehendem oder lückenlos verschweißtem Gleis (continuous welded rail CWR) gebaut. Bei diese Gleisbauart werden kürzere Schienen miteinander zu einer Schiene mit teilweise mehreren Kilometern Länge verschweißt. Je länger die Schiene ist, desto weniger Verbindungen werden pro Strecke benötigt. Aufgrund der geringen Zahl der Verbindungen ist ein durchgehendes Gleis sehr stabil und braucht weniger Wartung. Es erzeugt weniger Reibung zwischen Schiene und Rad, reduziert die Fahrgeräusche und führt zu einem ruhigeren Fahrverhalten der Fahrzeuge, so dass auch mit höheren Geschwindigkeiten gefahren werden kann.

Um die jahreszeitlich bedingten, temperaturabhängigen Schwankungen der Schienen in Breite und Länge auszugleichen, werden bei einem durchgehenden Gleis üblicherweise entsprechende Ausgleichsvorrichtungen eingebaut. Bei extremen Temperaturen, vor allem bei hohen Temperaturen, reichen die üblichen Ausgleichsvorrichtungen jedoch oft nicht aus, um die durch die Ausdehnung der Schienen erzeugten Vorschubkräfte und Druckbelastungen zu entspannen. Es besteht hier die Gefahr, dass sich das Gleis verformt und die Entgleisung der Fahrzeuge verursacht.

Beschichtungen von Eisenbahnschienen werden in der AU2001100356 offenbart. Andere hitzeabweisende Beschichtungen sind aus den CN104559398 und CN103589274 bekannt.

Es ist daher Aufgabe der vorliegenden Erfindung Mittel zur Verfügung zu stellen, welche eine extreme Erwärmung der Schienen durch Witterungseinflüsse vermindern, und welche einfach angewendet werden können, insbesondere auf schon vorhandenen Bahnstrecken.

Gelöst wird die Aufgabe durch eine Solarstrahlung-reflektierende Zusammensetzung zur Herstellung einer Beschichtung gemäß Hauptanspruch, die Verwendung der Zusammensetzung zur Herstellung einer Solarstrahlung-reflektierenden Beschichtung auf Schienen sowie ein Verfahren zur Beschichtung von Gleisen. Bekannt ist, dass Metallteile wie Schienen, wenn sie einer intensiven Sonnenstrahlung ausgesetzt sind, Temperaturen aufweisen, die deutlich höher liegen als die Umgebungstemperatur. Unter Sonnenstrahlung oder Solarstrahlung wird im Folgenden die von der Sonne ausgesandte Strahlung, welche die Erdoberfläche erreicht, verstanden. Der Auftrag der erfindungsgemäßen Solarstrahlung-reflektierenden Beschichtung auf Schienen, kann ein Aufheizen verhindern oder zumindest deutlich reduzieren.

Die erfindungsgemäße Zusammensetzung zur Herstellung einer Solarstrahlung-reflektierenden Beschichtung entsprechend Anspruch 1 enthält
- 4,5 bis 45 Gew.-% ein oder mehrere Bindemittel ausgewählt aus der Gruppe enthaltend Alkydharze, Acrylharze, Epoxidharzester, Polyesterharze und deren Gemische,
- 1,5 bis 31,5 Gew.-% ein oder mehrere Weißpigmente,
- 0,1 bis 7 Gew.-% Hohlkörper und
- 2 bis 35 Gew.-% Metalleffektpigmente,
   1-20 Gew.-% Korrosionsinhibitoren, wobei die Korrosionsinhibitoren Zink-Aluminium-Orthophosphat-Hydrat und/oder Zinkoxid sind.

Die Mengenangaben in Gewichtsprozent, abgekürzt Gew.-%, beziehen sich jeweils auf die Gesamtmenge der Zusammensetzung.

In einer bevorzugten Ausführungsform sind die erfindungsgemäßen Zusammensetzungen oder Beschichtungsstoffe "High Solids" mit einem Festkörpergehalt zumindest 50 %, bevorzugt größer gleich 60 %, besonders bevorzugt größer gleich 70 %. Der Festkörpergehalt ist definiert als der Massenanteil eines Beschichtungsstoffes, der nach dem Eindampfen (30 Minuten bei 130 °C), als Rückstand verbleibt. Dieser Rückstand enthält vor allem Bindemittel, Pigmente und Füllstoffe sowie nicht flüchtige Additive.

Die erfindungsgemäßen Zusammensetzungen können lösemittelbasiert oder wasser-basiert sein. Bevorzugt sind sie lösemittelbasierte Beschichtungsstoffe. Geeignete Lösemittel sind Carbonsäureester und Ether wie beispielsweise Butylacetat, 1-Methoxy-2-propylacetat, Butylglycolacetat, 3-Methoxybutylacetat und Butyldiglycolacetat.

Die erfindungsgemäßen Zusammensetzungen können als einkomponentige Beschichtungsstoffe oder als zweikomponentige Beschichtungsstoffe vorliegen.

Zweikomponentige Beschichtungsstoffe weisen in ihrer Stammkomponente Bindemittel auf, die erst durch Zugabe der zweiten Komponente, welche Härter enthält, vernetzt werden. Geeignete Bindemittel sind OH-funktionelle Alkydharze und OH-funktionelle Polyesterharze bzw. Polymerpolyole wie beispielsweise Polyesterpolyole, Polyetheresterpolyole, Polyetherpolyole und Polyacrylatpolyole. Bevorzugte Bindemittel sind Polyacrylatpolyole und Polyesterpolyole.

Geeignete Härter sind Isocyanate wie beispielsweise Diphenylmethandiisocyanat (MDI), Toluylendiisocyanat (TDI), Hexamethylendiisocyanat (HDI), Isophorondiisocyanat (IPDI), 4,4'-Diisocyanato-dicyclohexylmethan (HMDI), m-Xylylendiisocyanat (XDI), 1,6-Diisocyanato-2,2,4(2,4,4)-trimethylhexan (TMDI) oder Tetramethylxylylendiisocyanat (TMXDI). Ebenso geeignet sind Isocyanat-Oligomere und Isocyanat-Polymere auf Basis der genannten Diisocyanate wie beispielsweise Isocyanat-Oligomere mit Biuret-, Isocyanurat- und Uretdion-Struktur. Darüber hinaus sind auch isocyanatofunktionelle Reaktionsprodukte von Diisocyanaten mit ein- oder mehrwertigen Alkoholen wie beispielsweise das Reaktionsprodukt von Trimethylolpropan mit einem Überschuss an Toluylendiisocyanat (z.B. unter dem Handelsnamen "Desmodur L" der Covestro AG) geeignet. Auch Mischungen der genannten Isocyanate sind einsetzbar. Erfindungsgemäß besonders bevorzugt werden als Bindemittel Polyacrylatpolyole und als Härter Isocyanat-Oligomere mit Biuret-, -Isocyanurat- und Uretdion-Struktur eingesetzt. Ganz besonders bevorzugt werden als Bindemittel Polyacrylatpolyole und als Härter aliphatische Isocyanat-Oligomere mit Biuret-, Isocyanurat- und Uretdion-Struktur eingesetzt.

Bindemittelkomponente und Härterkomponente werden eingesetzt in einem molaren Verhältnis der OH-Gruppen des Bindemittels zu den NCO-Gruppen des Härters im Bereich von 1 : 0,6 bis 1 : 1,8, bevorzugt von 1 : 0,8 bis 1 : 1,5 besonders bevorzugt 1 : 0,9 bis 1 : 1,2.

Einkomponentige Beschichtungsstoffe weisen üblicherweise Bindemittel auf, welche die Beschichtung über physikalische Trocknung durch Verdampfen des Lösemittels oder oxidative Trocknung durch die Reaktion mit Luftsauerstoff ausbilden. Erfindungsgemäß bevorzugt sind Bindemittel, die durch Verdampfen des Lösemittels eine Beschichtung ausbilden, welche durch die Reaktion mit Sauerstoff vernetzt. Dadurch werden Beschichtungen erhalten die schnell trocken und fest sind und durch die anschließende Vernetzung sehr beständig werden.

Erfindungsgemäß geeignete Bindemittel sind trocknende und halbtrocknende Alkydharze insbesondere vinyl- und acrylmodifizierte Alkydharze, Polyacrylate und Epoxidharzester. Bevorzugte Alkydharze sind kurzölige Alkydharze auf Basis von trocknenden pflanzlichen Fettsäuren und Phthalsäureanhydrid. Bevorzugte Acrylharze sind selbstvernetzende Polyacrylate auf der Basis von Acryl- und Methacrylsäure und Alkoxymethylacrylamid-Copolymeren.

Erfindungsgemäß bevorzugt liegen die Bindemittel in einer Menge von 15 bis 30 Gew.-% bezogen auf die Gesamtmenge der Zusammensetzung vor, besonders bevorzugt 15 bis 25 Gew.-%.

Die erfindungsgemäß eingesetzten Hohlkörper zeigen nur geringe thermische Leitfähigkeit. Sie wirken somit isolierend auf die Beschichtung beziehungsweise auf das beschichtete Metallteil. Geeignete Hohlkörper sind Kunststoffhohlkugeln, Glashohlkugeln und keramische Mikrokugeln. Bevorzugte Hohlkörper sind Kunststoffhohlkugeln wie beispielsweise polymere, vorexpandierte Mikrosphären. Erfindungsgemäß bevorzugt liegen die Hohlkörper in einer Menge von 0,5 bis 4 Gew.-% bezogen auf die Gesamtmenge der Zusammensetzung vor, besonders bevorzugt 0,5 bis 2 Gew.-%.

Erfindungsgemäß werden Metalleffektpigmente als Reflektoren eingesetzt. Diese plättchenförmigen Metallpigmente richten sich in einem Medium parallel zur Oberfläche des umgebenden Systems aus und bewirken eine gerichtete Reflexion der einfallenden Strahlung. Geeignete Metalleffektpigmente sind Aluminium-Pigmente, Kupfer-Pigmente, Kupfer/Zink-Pigmente und Zink-Pigmente. Bevorzugt sind Aluminium-Pigmente. Erfindungsgemäß bevorzugt liegen die Metalleffektpigmente in einer Menge von 6 bis 18 Gew.-% bezogen auf die Gesamtmenge der Zusammensetzung vor, besonders bevorzugt 5 bis 10 Gew.-%.

Die Kombination der isolierenden Hohlkugeln mit den strahlungsreflektierenden Metalleffektpigmenten bewirkt eine geringere Erwärmung der Beschichtung und des darunter liegenden Metalls. Dieser Effekt kann durch den Einsatz von Weißpigmenten unterstützt werden, da diese einfallende Strahlung ebenfalls reflektieren.

Geeignete Weißpigmente sind Titanoxid, Zinksulfid, Zinkweiß (Zinkoxid), Antimontrioxid (Antimonweiß), basisches Bleicarbonat (Bleiweiß) und Lithopone. Bevorzugt sind Weißpigmente mit hoher Deckkraft wie beispielsweise Titandioxid. Erfindungsgemäß bevorzugt liegen die Weißpigmente in einer Menge von 5 bis 20 Gew.-% bezogen auf die Gesamtmenge der Zusammensetzung vor, besonders bevorzugt 5 bis 15 Gew.-%.

In einer weiteren Ausführungsform kann die erfindungsgemäße Zusammensetzung weiterhin Silikonadditive enthalten, um eine schmutzabweisende Oberfläche der ausgehärteten Beschichtung zu erhalten. Unter dem Begriff Silikonadditive werden im Folgenden Polyorganosiloxane verstanden, welche als Additive in Beschichtungsstoffen eingesetzt werden. Insbesondere bei der Verwendung als Beschichtung von Schienen, welche mit selbstschmierenden Fahrzeugen befahren werden, ist eine schmutzabweisende Oberfläche vorteilhaft. Verschmutzte Oberflächen verhindern die Reflexion der Solarstrahlung und reduzieren den gewünschten Temperatureffekt. Geeignete Silikonadditive sind Polydimethylsiloxane und Polyethersiloxan-Copolymere. Bevorzugt eingesetzt werden Polydimethylsiloxane. Die Silikonadditive werden bevorzugt in Mengen von 0,01 bis 0,5 Gew.-%, bevorzugt 0,05 bis 0,1 Gew.-%, bezogen auf die Gesamtmenge des Beschichtungsstoffes eingesetzt.

Die erfindungsgemäße Beschichtungszusammensetzung enthält Korrosionsinhibitoren. Durch den Einsatz von Korrosionsinhibitoren wird die Korrosion der Metalloberfläche verhindert oder zumindest reduziert, so dass die Beschichtung länger haftet. Somit kann der Zeitraum verlängert werden, in dem die Beschichtung intakt ist und eine ausreichende Reflexion der Solarstrahlung aufweist. Korrosionsinhibitoren sind Zink-Aluminium-Orthophosphat-Hydrat und Zinkoxid. Die Korrosionsinhibitoren liegen in einer Menge von 1 bis 20 Gew.-% bezogen auf die Gesamtmenge der Zusammensetzung vor, bevorzugt 5 bis 15 Gew.-%. Die erfindungsgemäße Zusammensetzung kann zusätzlich Füllstoffe enthalten. Geeignete Füllstoffe sind Calciumcarbonat, Talkum und Bariumsulfat. Bevorzugt ist Bariumsulfat. Die Füllstoffe liegen in einer Menge von 2 bis 32 Gew.-% bezogen auf die Gesamtmenge der Zusammensetzung vor, bevorzugt 10 bis 25 Gew.-%.

Auch können die üblichen, dem Fachmann geläufigen Hilfsstoffe und Additive eingesetzt werden wie beispielsweise Netz- und Dispergieradditive, Rheologieadditive, Entschäumer, Sikkative und Hautverhinderungsmittel.

Die erfindungsgemäße Zusammensetzung wird zur Herstellung von Solarstrahlung-reflektierenden Beschichtungen auf Metallteilen, insbesondere auf Schienen verwendet. Durch die erfindungsgemäße Beschichtung wird eine deutlich geringere Erwärmung der Metallteile erreicht. Im Unterschied zu einer nicht beschichteten Schiene, die beispielsweise eine Temperatur zwischen 60 und 65 °C aufweist, sind erfindungsgemäß beschichtete Schienen bei gleichen Bedingungen 10 bis 15 °C kälter.

Die erfindungsgemäße Beschichtung kann auf alle Schienen- und Gleistypen appliziert werden. Ihre Eigenschaften bleiben unabhängig von der mechanischen Belastung der Schiene erhalten. Auch die Art der Schienenfahrzeuge, die erfindungsgemäß beschichteten Schienen befahren, wie beispielweise Eisenbahnen, Straßenbahnen oder Kräne hat keinen Einfluss auf die Eigenschaften der Beschichtung.

Die erfindungsgemäße Beschichtung ist hoch beständig. Sie ist bewitterungsstabil, betriebsfest und schmiermittelbeständig. Sie weist eine gute Haftung auf, so dass sie sich auch auf Oberflächen mit Rost- und Kalkablagerungen anwenden lässt. Sie kann damit in einem erfindungsgemäßen Verfahren auf Schienen ohne aufwendige Baumaßnahmen am Gleis appliziert werden, so dass ein regulärer Betrieb nur in geringem Maß beeinträchtig wird. Das erfindungsgemäße Verfahren zur Beschichtung eines Gleises weist im ersten Schritt (a) die Reinigung der Schienen mit einem Lösungsmittel auf. Im zweiten Schritt (b) wird die erfindungsgemäße Zusammensetzung auf die Schienen des Gleises appliziert. In Schritt (a) werden Verunreinigungen wie Schmiermittelrückstände, die selbstfettenden Schienenfahrzeuge verlieren, Staub und anderes von der Schienenoberfläche entfernt. Die Entfernung von Rost- und Kalkablagerungen ist nicht notwendig, da die erfindungsgemäßen Beschichtungen wie schon erwähnt auch darauf gut haften. In Schritt (b) wird auf die gereinigte Oberfläche die erfindungsgemäße Beschichtung appliziert. Geeignete Applikationsmethoden sind Rollen, Streichen, Gießen, Hoch- und Niederdruckspritzen. Bevorzugt Rollen und Streichen.

### Beispiel

### Zusammensetzung 1

| **Bestandteil** | **Menge in [Gew.-%]** |
|---|---|
| kurzöliges, acryliertes Alkydharz | 15,0 |
| Polyacrylat | 7,5 |
| Aluminium-Pigmente | 8,0 |
| polymere, vorexpandierte Mikrosphären | 1,0 |
| Titiandioxid (Rutil) | 12,5 |
| Zinkoxid | 3,5 |
| Talkum | 7,0 |
| Baryt | 13,0 |
| Zink-Aluminium-Orthophosphat-Hydrat | 10,0 |
| Solvent-Naphtha | 8,0 |
| Xylol | 10,2 |
| Additive | 4,3 |

Mit der oben genannten Zusammensetzung 1 wurden Eisenbahnschienen des Typs R65 beschichtet. Anschließend wurden die Temperaturen von beschichteten und unbeschichteten Schienen unter Sonneneinstrahlung gemessen. Die Ergebnisse zeigen, dass die Zunahme der Temperaturdifferenz mit der Erhöhung der Umgebungstemperatur wächst. Der maximale Wert, der während der Tests erreicht wurde, betrug 4,5 °C bei einer Umgebungstemperatur von 53 °C in der Sonne und 30 °C im Schatten.

## Patentansprüche

1. Zusammensetzung zur Herstellung einer Solarstrahlung reflektierenden Beschichtung zumindest enthaltend 4,5 bis 45 Gew.-% ein oder mehrere Bindemittel ausgewählt aus der Gruppe enthaltend Alkydharze, Acrylharze, Epoxidharzester, Polyesterharze und deren Gemische,
1,5 bis 31,5 Gew.-% ein oder mehrere Weißpigmente,
0,1 bis 7 Gew.-% Hohlkörper,
2 bis 35 Gew.-% Metalleffektpigmente und
1 bis 20 Gew.-% Korrosionsinhibitoren, wobei die Korrosionsinhibitoren Zink-Aluminium-Orthophosphat-Hydrat und/oder Zinkoxid sind.

2. Zusammensetzung nach Anspruch 1 durch gekennzeichnet, dass die Zusammensetzung einen Festkörpergehalt von mindestens 50 % aufweist.

3. Zusammensetzung nach einem der Ansprüche 1 oder 2, **dadurch gekennzeichnet, dass** die Alkydharze kurzölige Alkydharze auf Basis von trocknenden pflanzlichen Fettsäuren und Phthalsäureanhydrid sind.

4. Zusammensetzung nach einem der Ansprüche 1 bis 3, **dadurch gekennzeichnet, dass** die Acrylharze selbstvernetzende Polyacrylate auf der Basis von Acryl- und Methacrylsäure und Alkoxymethylacrylamid-Copolymeren sind.

5. Zusammensetzung nach Anspruch 1, **dadurch gekennzeichnet, dass** die Zusammensetzung eine zweite Komponente aufweist, welche Härter enthält, wobei die Bindemittel ausgewählt sind aus OH-funktionellen Alkydharzen und OH-funktionellen Polyesterharzen.

6. Zusammensetzung nach Anspruch 5, **dadurch gekennzeichnet, dass** die Zusammensetzung Isocyanate als Härter enthält.

7. Zusammensetzung nach einem der Ansprüche 5 oder 6, **dadurch gekennzeichnet, dass** die Zusammensetzung Bindemittel und Härter in Mengen enthält, welche dem molaren Verhältnis der OH-Gruppen des Bindemittels zu den NCO-Gruppen des Härters im Bereich von 1 : 0,6 bis 1 : 1,8 entsprechen.

8. Zusammensetzung nach einem der voranstehenden Ansprüche, **dadurch gekennzeichnet, dass** die Weißpigmente Titanoxid, Zinksulfid, Antimontrioxid, basisches Bleicarbonat und/oder Lithopone sind.

9. Zusammensetzung nach einem der voranstehenden Ansprüche, **dadurch gekennzeichnet, dass** die Hohlkörper Kunststoffhohlkugeln, Glashohlkugeln und/oder keramische Mikrokugeln sind.

10. Zusammensetzung nach einem der voranstehenden Ansprüche, **dadurch gekennzeichnet, dass** die Metalleffektpigmente Aluminium-Pigmente, Kupfer-Pigmente, Kupfer/Zink-Pigmente und/oder Zink-Pigmente sind.

11. Zusammensetzung nach einem der voranstehenden Ansprüche, **dadurch gekennzeichnet, dass** die Zusammensetzung weiterhin Polyorganosiloxane in einer Menge von 0,01 bis 0,5 Gew.-% bezogen auf die Gesamtmenge des Beschichtungsstoffes enthält.

12. Zusammensetzung nach Anspruch 11, **dadurch gekennzeichnet, dass** die Polyorganosiloxane Polydimethylsiloxane und Polyethersiloxan-Copolymere, bevorzugt Polydimethylsiloxane, sind.

13. Verwendung der Zusammensetzung gemäß Anspruch 1 bis 12 zum Beschichten von Metallteilen.

14. Verwendung nach Anspruch 13 zum Beschichten von Schienen.

15. Verfahren zur Beschichtung eines Gleises **dadurch gekennzeichnet, dass**
(a) die Schienen des Gleises mit einem Lösungsmittel gereinigt werden und anschließend
(b) die Zusammensetzung nach einem der Ansprüche 1 bis 12 auf die Schienen aufgebracht wird.

## Claims

1. Composition for the production of a coating reflecting solar radiation containing at least 4.5 to 45 wt.% of one or more binders selected from among alkyd resins, acrylic resins, epoxy resin esters, polyester resins and mixtures thereof, 1.5 to 31.5 wt.% of one ore more white pigments, 0.1 to 7 wt.% of hollow bodies, 2 to 35 wt.% of metallic pigments and 1 to 20 wt.% of corrosion inhibitors, with the corrosion inhibitors being zinc aluminium orthophosphate hydrate and/or zinc oxide.

2. Composition according to claim 1, **characterised in that** the composition has a solid content of at least 50 %.

3. Composition according to one of the claims 1 or 2, **characterised in that** the alkyd resins are short oil alkyd resins based on drying vegetable fatty acids and phtalic anhydride.

4. Composition according to one of the claims 1 to 3, **characterised in that** the acrylic resins are self-crosslinking polyacrylates based on acrylic and methacrylic acid and alkoxy methyl acrylamide copolymers.

5. Composition according to claim 1, **characterised in that** the composition has a second component containing hardeners, with the binders being selected from among OH-functional alkyd resins and OH-functional polyester resins.

6. Composition according to claim 5, **characterised in that** the composition contains isocyanates as hardeners.

7. Composition according to one of the claims 5 or 6, **characterised in that** the composition contains binders and hardeners, the quantity of which corresponds to the molar ratio of the OH groups of the binder to the NCO groups of the hardener in the range from 1:0.6 to 1:1.8.

8. Composition according to one of the preceding claims, **characterised in that** the white pigments are titanium oxide, zinc sulfide, antimony trioxide, basic lead carbonate and/or lithophones.

9. Composition according to one of the preceding claims, **characterised in that** the hollow bodies are plastic spheres, glass spheres and/or ceramic microspheres.

10. Composition according to one of the preceding claims, **characterised in that** the metallic pigments are aluminium pigments, copper pigments, copper/zinc pigments and/or zinc pigments.

11. Composition according to one of the preceding claims, **characterised in that** the composition further contains polyorganosiloxanes, the quantity of which ranges from 0.01 to 0.5 wt.% based on the total quantity of the coating material.

12. Composition according to claim 11, **characterised in that** the polyorganosiloxanes are polydimethylsiloxanes and polyether siloxane copolymers, preferably polydimethylsiloxanes.

13. Use of the composition according to claims 1 to 12 for the coating of metal parts.

14. Use according to claim 13 for the coating of rails.

15. Method for the coating of a track, **characterised in that**
(a) the rails of the track are cleaned with a solvent and that
(b) the composition according to one of the claims 1 to 12 is applied to the rails afterwards.

## Revendications

1. Composition pour la production d'un revêtement réfléchissant le rayonnement solaire contenant au moins de 4,5 à 45 % en poids d'un ou de plusieurs liants choisis parmi les résines alkydes, les résines acryliques, les esters de résine époxy, les résines polyester et leurs mélanges, de 1,5 à 31,5 % en poids d'un ou de plusieurs pigments blancs, de 0,1 à 7 % en poids de corps creux, de 2 à 35 % en poids de pigments à effet métallique et de 1 à 20 % en poids d'inhibiteurs de corrosion, ces derniers étant de l'orthophosphate hydraté de zinc et d'aluminium hydraté et/ou de l'oxyde de zinc.

2. Composition selon la revendication 1, **caractérisée en ce que** la composition a une teneur en solides d'au moins 50 %.

3. Composition selon l'une des revendications 1 ou 2, **caractérisée en ce que** les résines alkydes sont des résines alkydes à huile courte à base d'acides gras végétaux siccatifs et d'anhydride phtalique.

4. Composition selon l'une quelconque des revendications 1 à 3, **caractérisée en ce que** les résines acryliques sont des polyacrylates autoréticulants à base d'acide acrylique et méthacrylique et de copolymères d'alcoxyméthylacrylamide.

5. Composition selon la revendication 1, **caractérisée en ce que** la composition a un deuxième composant contenant des durcisseurs, où les liants sont choisis parmi les résines alkydes à fonction OH et les résines polyester à fonction OH.

6. Composition selon la revendication 5, **caractérisée en ce que** la composition contient des isocyanates comme durcisseurs.

7. Composition selon l'une des revendications 5 ou 6, **caractérisée en ce que** la composition contient des liants et des durcisseurs en quantités qui correspondent au rapport molaire des groupes OH du liant aux groupes NCO du durcisseur dans la plage de 1:0,6 à 1:1,8.

8. Composition selon l'une des revendications précédentes, **caractérisée en ce que** les pigments blancs sont de l'oxyde de titane, du sulfure de zinc, du trioxyde d'antimoine, du carbonate basique de plomb et/ou des lithopones.

9. Composition selon l'une des revendications précédentes, **caractérisée en ce que** les corps creux sont des sphères en plastique, en verre et/ou des microsphères en céramique.

10. Composition selon l'une des revendications précédentes, **caractérisée en ce que** les pigments à effet métallique sont des pigments d'aluminium, des pigments de cuivre, des pigments cuivre-zinc et/ou des pigments de zinc.

11. Composition selon l'une des revendications précédentes, **caractérisée en ce que** la composition contient en outre des polyorganosiloxanes en une quantité de 0,01 to 0,5 % en poids sur la base de la quantité totale du matériau de revêtement.

12. Composition selon la revendication 11, **caractérisé en ce que** les polyorganosiloxanes sont des polydiméthylsiloxanes et des copolymères polyéthersiloxanes, de préférence des polydiméthylsiloxanes.

13. Utilisation de la composition selon les revendications 1 à 12 pour le revêtement de pièces métalliques.

14. Utilisation selon la revendication 13 pour le revêtement de rails.

15. Procédé de rêvetement d'une voie ferrée, **caractérisé en ce que**
(a) les rails de la voie ferrée sont nettoyés avec un solvant et qu'ensuite
(b) la composition selon l'une quelconque des revendications 1 à 12 est appliquée sur les rails.
